Europäisches Patentamt

European Patent Office

Office européen des brevets

(11) Numéro de publication : **0 308 311 B1**

(12) **FASCICULE DE BREVET EUROPEEN**

(45) Date de publication du fascicule du brevet :
**29.07.92 Bulletin 92/31**

(51) Int. Cl.$^5$ : **C01F 17/00**

(21) Numéro de dépôt : **88402292.2**

(22) Date de dépôt : **12.09.88**

(54) **Procédé d'obtention d'une dispersion colloidale d'un composé de terre rare en milieu aqueux et produit obtenu.**

(30) Priorité : **14.09.87 FR 8712669**

(43) Date de publication de la demande :
**22.03.89 Bulletin 89/12**

(45) Mention de la délivrance du brevet :
**29.07.92 Bulletin 92/31**

(84) Etats contractants désignés :
**AT BE CH DE ES FR GB GR IT LI LU NL SE**

(56) Documents cités :
**US-A- 3 082 103**
**US-A- 3 476 691**
**CHEMICAL ABSTRACTS, vol. 108, no. 17, 25**
**avril 1988, page 689, résumé no. 149920f,**
**Columbus, Ohio, US; & JP-A-62 209 039(TAKI**
**CHEMICAL CO., LTD) 14-09-1987**

(73) Titulaire : **RHONE-POULENC CHIMIE**
**25, quai Paul Doumer**
**F-92408 Courbevoie Cédex (FR)**

(72) Inventeur : **David, Claire**
**14bis, rue Friant**
**F-75014 Paris (FR)**

(74) Mandataire : **Dutruc-Rosset, Marie-Claude et al**
**RHONE-POULENC INTERSERVICES Service Brevets Chimie 25, Quai Paul Doumer**
**F-92408 Courbevoie Cédex (FR)**

EP 0 308 311 B1

## Description

La présente invention a pour objet un procédé d'obtention d'une dispersion colloïdale d'un composé de terre rare, en milieu aqueux. Plus précisément, l'invention concerne un procédé de préparation d'une dispersion colloïdale d'un composé d'une terre rare yttrique. Elle vise également, à titre de produits industriels nouveaux, le produit obtenu.

Dans l'exposé qui suit de la présente invention, on entend par "terre rare yttrique", les éléments les plus lourds des terres rares, conformément au numéro atomique, commençant avec le samarium et finissant avec le lutécium et comprenant l'yttrium.

On a déjà proposé dans le document US-A-3476691 de préparer un sol d'yttrium selon un procédé qui consiste à préparer un oxyde d'yttrium hydraté par précipitation avec une base ($NH_4OH$) à partir d'une solution d'un sel d'yttrium, puis à mettre ledit oxyde d'yttrium hydraté en suspension dans de l'eau, à traiter par un acide fort, et enfin à traiter thermiquement la suspension.

On a également proposé selon US-A 3024 199, un procédé de préparation de sols aqueux d'oxydes de terres rares hydratés selon un procédé qui consiste :

– à mettre en contact une solution aqueuse d'un sel de terre rare monovalent avec de l'ammoniaque afin de précipiter l'oxyde de terre rare hydraté correspondant ;
– à éliminer la plus grande partie des sels d'ammonium à l'aide d'ammoniaque ; le pH étant maintenu entre 9,5 et 10,5 ;
– à séparer l'oxyde de terre rare hydraté puis à le peptiser par chauffage dans un intervalle de température allant de 60° C à 100° C.

Les sols de terres rares hydratés obtenus présentent une concentration exprimée en oxydes de terres rares comprise entre 10 et 50 % en poids, des tailles de particules allant de 5 à 200 nm avec un rapport longueur/diamètre d'environ 1:1 à 5:1, ont un pH de 7,0 à 8,3, et contiennent un anion monovalent stabilisant : le rapport molaire oxyde de terre rare/anion monovalent stabilisant étant de 6,6:1 à 165:1.

Il s'agit donc de sols d'oxydes de terres rares hydratés ayant une formule proche de celle des hydroxydes vrais de terres rares.

Contrairement au procédé de l'art antérieur qui comporte de nombreuses étapes et fait appel à un oxyde de terre rare hydraté fraîchement préparé et difficilement manipulable, à la mise en oeuvre de quantités importantes d'ammoniaque, l'invention propose un procédé beaucoup plus simple de préparation d'une dispersion colloïdale d'un composé de terre rare, en milieux aqueux que l'on désignera, par la suite, par le vocable "sol".

Le procédé de préparation de l'invention est caractérisé par le fait qu'il consiste à faire réagir un oxyde de terre rare avec une quantité contrôlée d'un acide monovalent, soluble dans l'eau et présentant un $pk_a$ compris entre 2,5 et 5,0, puis à chauffer le milieu réactionnel obtenu.

Le procédé de l'invention permet d'obtenir directement un sol dont les caractéristiques sont précisées ultérieurement.

Intervient donc dans le procédé de l'invention, un oxyde de terre rare qui est généralement sous forme sesquioxyde.

On fait appel de préférence à un oxyde d'une terre rare yttrique et encore plus préférentiellement à l'oxyde d'yttrium $Y_2O_3$ ou à l'oxyde d'holmium $Ho_2O_3$.

Il est souhaitable que l'oxyde mis en oeuvre soit d'une grande pureté, de préférence, supérieure ou égale à 99 % et l'on emploie plus préférentiellement un oxyde ayant une pureté de 99,99 %.

L'oxyde de terre rare se présente sous la forme d'une poudre fine dont la taille de ses particules est de quelques $\mu m$ et dont le diamètre moyen se situe, le plus souvent entre 1 et 5 $\mu m$. On définit le diamètre moyen comme étant un diamètre tel que 50 % en poids des particules ont un diamètre supérieur ou inférieur au diamètre moyen.

Une variante préférée du procédé de l'invention consiste à mettre en oeuvre un oxyde de terre rare ayant subi une calcination à une température comprise entre 850°C et 1050°C et, de préférence, aux environs de 950°C.

La durée de ladite calcination se situe de préférence entre 2 et 4 heures.

En ce qui concerne l'acide, son choix est relié au fait qu'il doit être soluble dans l'eau, être monovalent et présenter un $pk_a$ choisi entre 2,5 et 5,0.

L'acide acétique convient tout-à-fait bien à la mise en oeuvre du procédé de l'invention.

On fait appel, de préférence, à un acide exempt d'impuretés. Sa concentration initiale n'est pas critique et il peut être utilisé dilué, par exemple, 1 N ou concentré jusqu'à 17 N. Généralement, la concentration de la solution dudit acide est choisie entre 1 et 4N car elle constitue le milieu de dispersion de l'oxyde de terre rare et doit donc constituer une phase liquide suffisamment importante pour permettre d'effectuer l'attaque dans de bonnes conditions d'agitation.

La quantité d'acide utilisée est un élément important du procédé de l'invention. Elle doit être en défaut par rapport à la stoechimétrie ce qui signifie que le rapport molaire entre l'acide mis en oeuvre et l'oxyde de terre rare exprimé en cation métallique est inférieur à 2,5 et supérieur à 1.

La borne inférieure est définie eu égard aux impératifs économiques de bon rendement réactionnel et d'une bonne cinétique réactionnelle.

D'une manière préférentielle, ledit rapport molaire est choisi entre 1,1 et 2,2 et, de préférence, compris entre 1,2 et 1,8.

Selon un mode de réalisation pratique de l'invention, on additionne l'oxyde de terre rare dans la solution de l'acide dont la concentration est ajustée de telle sorte qu'elle réponde à ce qui est indiqué précédemment.

Selon un autre mode de réalisation, on met l'oxyde de terre rare en suspension dans l'eau et l'on ajoute ensuite l'acide en quantité adéquate.

Cette opération est effectuée dans les deux cas sous agitation et à température ambiante qui se situe le plus souvent entre 15° C et 25° C.

La deuxième étape du procédé de l'invention consiste à soumettre le milieu réactionnel à un traitement thermique à une température qui se situe entre 50° C et la température de reflux du milieu réactionnel. D'une manière préférentielle, le traitement thermique est effectué entre 70° C et 100° C.

La durée dudit traitement est très variable et sera d'autant plus courte que la température est élevée.

Une fois la température réactionnelle atteinte, on la maintient pendant 1 à 4 heures et, de préférence, pendant 3 à 4 heures.

On observe la formation d'un sol d'un composé de terre rare et l'on note la présence éventuelle d'un culot constitué essentiellement de l'oxyde de terre rare non réagi lorsque l'oxyde de terre rare a été traité à une température inférieure à 70°C.

Une variante préférée de l'invention est de séparer ledit culot selon les techniques de séparation solide-liquide : filtration, décantation ou centrifugation.

La séparation est effectuée, de préférence, par centrifugation et l'on récupère une dispersion colloïdale d'un composé de terre rare en milieu aqueux.

Conformément à la présente invention, le composé de terre rare se trouve sous la forme d'une dispersion colloïdale dans l'eau ce qui signifie que ledit composé a des particules de dimensions colloïdales mais ceci n'exclut pas la présence de terre rare sous forme ionique.

Le taux de terre rare sous forme colloïdale est, de préférence, compris entre 85 et 100 %.

Ladite dispersion peut présenter une concentration en composé de terre rare exprimée en oxyde de terre rare pouvant atteindre 1 mole/litre.

Son pH est voisin de la neutralité et se situe, plus précisément, entre 6,0 et 7,5.

La composition chimique des colloïdes est déterminée sur le résidu obtenu après ultracentrifugation de la dispersion, par dosage de la terre rare selon la méthode complexométrique par l'EDTA et par dosage acidimétrique en retour de l'anion monovalent provenant de l'acide.

Elle correspond à la formule chimique suivante (I) :

$$TR\ (A)_x\ (OH)_{3-x}\quad (I)$$

dans laquelle :

– TR symbolise le cation terre rare, de préférence yttrique.

– A représente l'anion d'un acide monovalent soluble dans l'eau et présentant un $pk_a$ compris entre 2,5 et 5.

– x est un nombre inférieur à 2,5 et supérieur à 1, de préférence compris entre 1,1 et 2,2 et, encore plus préférentiellement, entre 1,2 et 1,8.

Les sols préférés de l'invention sont ceux d'un composé de terre rare répondant à la formule (I) dans laquelle TR représente l'yttrium ou l'holmium et A, l'anion acétate : x étant compris entre 1,1 et 2,2 et, de préférence, entre 1,2 et 1,8.

Les colloïdes obtenus selon l'invention présentent une forme sphérique.

La taille des colloïdes est définie par la mesure du diamètre hydrodynamique de colloïdes déterminé par diffusion quasiélastique de la lumière selon la méthode décrite par Michael L. McConnell dans "Analytical Chemistry, Vol. 53, n° 8, 1007 A (1981)". Elle s'échelonne entre 10 et 2 000 Å et le diamètre hydrodynamique moyen des colloïdes se situe entre 30 et 100 Å.

On remarquera que les sols obtenus selon le procédé de l'invention sont parfaitement stables dans les conditions habituelles de stockage : celui-ci étant effectué à une température, de préférence, inférieure à la température ambiante et située, préférentiellement, entre 5 et 10° C.

Les propriétés des sols obtenus sont mises en évidence dans les exemples qui suivent :

## Exemple 1

Dans un réacteur de 2 litres muni d'un thermomètre, d'un dispositif d'agitation, d'un système d'introduction des réactifs, d'un réfrigérant ascendant et équipé d'un dispositif de chauffage et d'une unité de mesure du pH, on introduit :

- 1 000 cm³ d'une solution d'acide acétique 2N.

Dans ledit milieu, on met en dispersion par agitation mécanique, 173 g d'oxyde d'yttrium de pureté 99,99 % commercialisé par la Société Rhône-Poulenc sous l'appellation qualité luminophore.

Ensuite, on commence à chauffer et une fois la température de 70° C atteinte, on la maintient pendant 3 heures 30 minutes.

On observe la formation d'un sol d'un composé d'yttrium et l'on note la présence d'un culot constitué d'oxyde d'yttrium n'ayant pas réagi qui peut être séparé comme décrit ci-après et éventuellement recyclé à l'étape d'attaque.

On soumet le milieu réactionnel à une opération de centrifugation à l'aide d'une centrifugeuse JOUAN à 3 500 tours/ minutes, pendant 20 minutes.

On prélève le surnageant.

On élimine les grosses particules entraînées par filtration sur papier millipores dont le diamètre des pores est supérieur à 1 $\mu$m.

On détermine un rendement de la réaction d'attaque de 99 %.

On obtient un sol d'un composé d'yttrium répondant à la formule chimique suivante : $Y(OH)_{1,7}(CH_3COO)_{1,3}$ ayant une concentration exprimée en $Y_2O_3$ égale à 182 g/l et un pH égal à 6,8.

Le pourcentage d'yttrium sous forme colloïdale est déterminé en dosant l'yttrium total dans la solution surnageante obtenue après ultracentrifugation (45 000 tours/min - 1 heure) par titrage complexométrique à l'aide d'une solution titrée d'EDTA. Le dosage de la solution surnageante en yttrium permet de déterminer un pourcentage d'yttrium sous forme colloïdale de 95 %.

On caractérise la taille des colloïdes par diffusion quasiélastique de la lumière selon la méthode décrite par Michael L. McConnel dans Analytical Chemistry. Vol. 58 n° 8 1007 A (1981). Le diamètre hydrodynamique moyen des colloïdes est de l'ordre de 4,1 nm.

On note que le sol obtenu présente une stabilité au stockage à 5°C d'au moins un mois.

Exemple 2

Dans un réacteur tel que décrit dans l'exemple 1, on introduit :

- 1 000 cm³ d'une solution d'acide acétique 2 N.

Dans ledit milieu, on met en dispersion par agitation mécanique, 173 g d'oxyde d'yttrium de pureté 99,99 % commercialisé par la Société Rhône-Poulenc sous l'appellation qualité luminophore.

Ensuite, on commence à chauffer et une fois la température de 100°C atteinte, on la maintient pendant 1 heure.

On observe la formation d'un sol d'un composé d'yttrium.

On détermine un rendement de la réaction d'attaque de 99 %.

On obtient un sol d'un composé d'yttrium répondant à la formule chimique suivante : $Y(OH)_{1,7}(CH_3COO)_{1,3}$ ayant une concentration exprimée en $Y_2O_3$ égale à 182 g/l et un pH égal à 6,7.

Le pourcentage d'yttrium sous forme colloïdale est de 95 %.

Le diamètre moyen hydrodynamique des colloïdes est de 43 Å.

Le sol obtenu présente une stabilité au stockage à 5°C d'au moins un mois.

Exemple 3

Dans un réacteur tel que décrit dans l'exemple 1, on introduit :

- 1 000 cm³ d'une solution d'acide acétique 2N.

Dans ledit milieu, on met en dispersion par agitation mécanique, 290 g d'oxyde d'holmium de pureté 99,99 % commercialisé également par la Société Rhône-Poulenc.

Ensuite, on commence à chauffer et une fois la température de 70°C atteinte, on la maintient pendant 3 heures 30 minutes.

On observe la formation d'un sol d'un composé d'holmium et l'on note la présence d'un culot constitué d'oxyde d'holmium n'ayant pas réagi qui peut être séparé comme décrit ci-après et éventuellement recyclé à l'étape d'attaque.

On soumet le milieu réactionnel à une opération de centrifugation à l'aide d'une centrifugeuse JOUAN à 3 500 tours/minute, pendant 20 minutes.

On prélève le surnageant.

On élimine les grosses particules entraînées par filtration sur papier millipores dont le diamètre des pores est supérieur à 1 µm.

On détermine un rendement de la réaction d'attaque de 99 %.

On obtient un sol d'un composé d'holmium répondant à la formule chimique suivante : $Ho(OH)_{1,7}(CH_3COO)_{1,3}$, ayant une concentration exprimée en $Ho_2O_3$ égale à 290 g/l et un pH égale à 7,1.

Le pourcentage d'holmium sous forme colloïdale est de 82 %.

Le diamètre moyen hydrodynamique des colloïdes est de 45 Å.

Le sol obtenu présente une stabilité au stockage à 5°C d'au moins un mois.

**Revendications**

1. Procédé de préparation d'une dispersion colloïdale d'un composé de terre rare en milieu aqueux caractérisé par le fait qu'il consiste à faire réagir un oxyde de terre rare avec un acide monovalent, soluble dans l'eau, présentant un pka compris entre 2,5 et 5,0, la quantité d'acide utilisée étant telle que le rapport molaire entre l'acide mis en oeuvre et l'oxyde de terre rare exprimé en cation métallique est inférieur à 2,5 et supérieur à 1, puis à chauffer le milieu réactionnel obtenu à une température qui se situe entre 50°C et la température de reflux du milieu réactionnel.

2. Procédé selon la revendication 1 caractérisé par le fait que l'oxyde de terre rare est un oxyde d'une terre rare yttrique.

3. Procédé selon la revendication 2 caractérisé par le fait que l'oxyde de terre rare est l'oxyde d'yttrium ou l'oxyde d'holmium.

4. Procédé selon l'une des revendications 1 à 3 caractérisé par le fait que l'oxyde de terre rare présente une pureté comprise entre 99 et 99,99 %

5. Procédé selon l'une des revendications 1 à 4 caractérisé par le fait que l'oxyde de terre rare est soumis à une opération de calcination à une température comprise entre 850°C et 1050°C.

6. Procédé selon la revendication 5 caractérisé par le fait que ladite température de calcination est aux environs de 950°C.

7. Procédé selon l'une des revendications 5 et 6 caractérisé par le fait que la durée de la calcination varie entre 2 et 4 heures.

8. Procédé selon l'une des revendications 1 à 7 caractérisé par le fait que l'acide mis en oeuvre est l'acide acétique.

9. Procédé selon l'une des revendications 1 à 8 caractérisé par le fait que la concentration de la solution dudit acide est choisie entre 1 et 4 N.

10. Procédé selon une des revendications 1 à 9 caractérisé par le fait que ledit rapport molaire est compris entre 1,1 et 2,2.

11. Procédé selon l'une des revendications 1 à 10 caractérisé par le fait que ledit rapport molaire est compris entre 1,2 et 1,8.

12. Procédé selon l'une des revendications 1 à 11 caractérisé par le fait que l'on additionne l'oxyde de terre rare dans la solution aqueuse de l'acide monovalent à la concentration désirée.

13. Procédé selon l'une des revendications 1 à 11 caractérisé par le fait que l'on met l'oxyde de terre rare en suspension dans de l'eau et l'on ajoute ensuite l'acide en quantité adéquate.

14. Procédé selon une des revendications 1 à 13 caractérisé par le fait que ladite température du milieu réactionnel est comprise entre 70 et 100°C.

15. Procédé selon l'une des revendications 1 et 14 caractérisé par le fait que la température réactionnelle est maintenue pendant 1 à 4 heures.

16. Procédé selon la revendication 15 caractérisé par le fait que la température réactionnelle est maintenue pendant 3 à 4 heures.

17. Procédé selon l'une des revendications 1 à 16 caractérisé par le fait que l'on sépare le culot par filtration, décantation ou centrifugation.

18. Nouvelle dispersion colloïdale d'un composé de terre rare en milieu aqueux répondant à la formule chimique suivante (I) :

$$TR\,(A)_x\,(OH)_{3-x}\quad(I)$$

– TR symbolise le cation terre rare ;

– A représente l'anion d'un acide monovalent soluble dans l'eau et présentant un $pk_a$ compris entre 2,5 et 5 ;

– x est un nombre inférieur à 2,5 et supérieur à 1.

19. Nouvelle dispersion colloïdale selon la revendication 18 caractérisée par le fait que TR représente une terre rare yttrique.

20. Nouvelle dispersion colloïdale selon la revendication 19 caractérisée par le fait que TR représente l'yttrium ou l'holmium.

21. Nouvelle dispersion colloïdale selon l'une des revendications 18 à 20 caractérisée par le fait que A représente l'anion acétate.

22. Nouvelle dispersion colloïdale selon l'une des revendications 18 à 21 caractérisée par le fait que x est compris entre 1,1 et 2,2.

23. Nouvelle dispersion colloïdale selon la revendication 22 caractérisée par le fait que x est compris entre 1,2 et 1,8.

24. Nouvelle dispersion colloïdale selon l'une des revendications 18 à 23 caractérisée par le fait que les colloïdes sont de forme sphérique.

25. Nouvelle dispersion colloïdale selon l'une des revendications 18 à 24 caractérisée par le fait que le diamètre moyen hydrodynamique des colloïdes se situe entre 30 et 100 Å.

26. Nouvelle dispersion colloïdale selon l'une des revendications 18 à 25 caractérisée par le fait qu'elle présente un taux de terre rare sous forme colloïdale compris entre 85 et 100 %.

27. Nouvelle dispersion colloïdale selon l'une des revendications 18 à 26 caractérisée par le fait qu'elle peut présenter une forte concentration en composé de terre rare exprimée en oxyde de terre rare pouvant atteindre 1 mole/litre.

28. Nouvelle dispersion colloïdale selon l'une des revendications 18 à 27 caractérisée par le fait qu'elle présente un pH compris entre 6,0 et 7,5.

## Patentansprüche

1. Verfahren zur Herstellung einer kolloidalen Dispersion einer Seltenerdverbindung in wäßrigem Medium, dadurch gekennzeichnet, daß man ein Seltenerdoxid mit einer monovalenten in Wasser löslichen, einen $pK_a$ zwischen 2,5 und 5,0 aufweisenden Säure reagieren läßt, die Menge der verwendeten Säure derart ist, daß das Molverhältnis zwischen eingesetzter Säure und Seltenerdoxid, ausgedrückt als Metallkation, unter 2,5 und über 1 ist, dann das erhaltene Reaktionsmedium auf eine Temperatur zwischen 50°C und der Rückflußtemperatur des Reaktionsmediums erwärmt.

2. Verfahren nach Anspruch 1, dadurch gekennzeichnet, daß das Seltenerdoxid ein Seltenerdoxid von der Art des Yttriums ist.

3. Verfahren nach Anspruch 2, dadurch gekennzeichnet, daß das Seltenerdoxid Yttriumoxid oder Holmiumoxid ist.

4. Verfahren nach einem der Ansprüche 1 bis 3, dadurch gekennzeichnet, daß das Seltenerdoxid eine Reinheit von zwischen 99 und 99,99% aufweist.

5. Verfahren nach einem der Ansprüche 1 bis 4, dadurch gekennzeichnet, daß das Seltenerdoxid einer Calcinierung bei einer Temperatur zwischen 850°C und 1050°C unterzogen ist.

6. Verfahren nach Anspruch 5, dadurch gekennzeichnet, daß die Calcinierungstemperatur etwa 950°C beträgt.

7. Verfahren nach einem der Ansprüche 5 und 6, dadurch gekennzeichnet, daß die Dauer der Calcinierung zwischen 2 und 4 Stunden variiert.

8. Verfahren nach einem der Ansprüche 1 bis 7, dadurch gekennzeichnet, daß die eingesetzte Säure Essigsäure ist.

9. Verfahren nach einem der Ansprüche 1 bis 8, dadurch gekennzeichnet, daß die Konzentration dieser Säure zwischen 1 und 4 N gewählt ist.

10. Verfahren nach einem der Ansprüche 1 bis 9, dadurch gekennzeichnet, daß genanntes Molverhältnis zwischen 1,1 und 2,2 beträgt.

11. Verfahren nach einem der Ansprüche 1 bis 10, dadurch gekennzeichnet, daß dieses Molverhältnis zwischen 1,2 und 1,8 beträgt.

12. Verfahren nach einem der Ansprüche 1 bis 11, dadurch gekennzeichnet, daß man das Seltenerdoxid zu der wäßrigen Lösung der monovalenten Säure einer gewünschten Konzentration hinzufügt.

13. Verfahren nach einem der Ansprüche 1 bis 11, dadurch gekennzeichnet, daß man das Seltenerdoxid in Wasser suspendiert und anschließend die Säure in einer geeigneten Menge hinzufügt.

14. Verfahren nach einem der Ansprüche 1 bis 13, dadurch gekennzeichnet, daß diese Temperatur des Reaktionsmediums zwischen 70 und 100°C beträgt.

15. Verfahren nach einem der Ansprüche 1 und 14, dadurch gekennzeichnet, daß die Reaktionstemperatur 1 bis 4 Stunden lang gehalten wird.

16. Verfahren nach Anspruch 15, dadurch gekennzeichnat, daß die Reaktionstemperatur 3 bis 4 Stunden lang gehalten wird.

17. Verfahren nach einem der Ansprüche 1 bis 16, dadurch gekennzeichnet, daß man den Bodensatz durch Filtration, Dekantieren oder Zentrifugieren abtrennt.

18. Neue kolloidale Dispersion einer Seltenerdverbindung in wäßrigen Medium, entsprechend der folgenden chemischen Formel (I):

$$TR (A)_x (OH)_{3-x} \quad (I)$$

– TR bedeutet das Seltenerdkation;

– A bedeutet das Anion einer monovalenten, in Wasser löslichen Säure mit einem pKa zwischen 2,5 und 5;

– x ist eine Zahl unter 2,5 und über 1.

19. Neue kolloidale Dispersion nach Anspruch 18, dadurch gekennzeichnet, daß TR eine Seltene Erde von der Art des Yttriums ist.

20. Neue kolloidale Dispersion nach Anspruch 19, dadurch gekennzeichnet, daß TR Yttrium oder Holmiun bedeutet.

21. Neue kolloidale Dispersion nach einem der Ansprüche 18 bis 20, dadurch gekennzeichnet, daß A Acetatanion bedeutet.

22. Neue kolloidale Dispersion nach einem der Ansprüche 18 bis 21, dadurch gekennzeichnet, daß x zwischen 1,1 und 2,2 beträgt.

23. Neue kolloidale Dispersion nach Anspruch 22, dadurch gekennzeichnet, daß x zwischen 1,2 und 1,8 liegt.

24. Neue kolloidale Dispersion nach einem der Ansprüche 18 bis 23, dadurch gekennzeichnet, daß die Kolloide sphärische Form aufweisen.

25. Neue kolloidale Dispersion nach einem der Ansprüche 18 bis 24, dadurch gekennzeichnet, daß der mittlere hydrodynamische Durchmesser der Kolloide zwischen 30 und 100 Å beträgt.

26. Neue kolloidale Dispersion nach einem der Ansprüche 18 bis 25, dadurch gekennzeichnet, daß der Gehalt der Seltenen Erden in kolloidaler Form zwischen 85 und 100% beträgt.

27. Neue kolloidale Dispersion nach einem der Ansprüche 18 bis 26, dadurch gekennzeichnet, daß sie eine hohe Konzentration an Seltenerdverbindung, ausgedrückt als Seltenerdoxid, bis zu einem mol/Liter erreichen kann.

28. Neue kolloidale Dispersion nach einem der Ansprüche 18 bis 27, dadurch gekennzeichnet, daß sie einen pH-Wert zwischen 6,0 und 7,5 aufweist.

## Claims

1. Process for the preparation of a colloidal dispersion of a rare earth compound in an aqueous medium, characterised in that it consists in reacting a rare earth oxide with a water-soluble monovalent acid which has a $pk_a$ of between 2.5 and 5.0, the quantity of acid employed being such that the molar ratio of the acid used to the rare earth oxide expressed as metal cation is lower than 2.5 and higher than 1, and in then heating the reaction mixture obtained to a temperature which lies between 50°C and the reflux temperature of the reaction mixture.

2. Process according to Claim 1, characterised in that the rare earth oxide is an oxide of an yttric rare earth.

3. Process according to Claim 2, characterised in that the rare earth oxide is yttrium oxide or holmium oxide.

4. Process according to one of Claims 1 to 3, characterised in that the rare earth oxide exhibits a purity of between 99 and 99.99 %.

5. Process according to one of Claims 1 to 4, characterised in that the rare earth oxide is subjected to a calcining operation at a temperature of between 850°C and 1050°C.

6. Process according to Claim 5, characterised in that the said calcination temperature is in the region of 950°C.

7. Process according to either of Claims 5 and 6, characterised in that the calcination period varies between 2 and 4 hours.

8. Process according to one of Claims 1 to 7, characterised in that the acid used is acetic acid.

9. Process according to one of Claims 1 to 8, characterised in that the concentration of the solution of the said acid is chosen between 1 and 4 N.

10. Process according to one of Claims 1 to 9, characterised in that the said molar ratio is between 1.1 and 2.2.

11. Process according to one of Claims 1 to 10, characterised in that the said molar ratio is between 1.2 and 1.8.

12. Process according to one of Claims 1 to 11, characterised in that the rare earth oxide is added to the aqueous solution of the monovalent acid in the desired concentration.

13. Process according to one of Claims 1 to 11, characterised in that the rare earth oxide is suspended in water and that the acid is then added in sufficient quantity.

14. Process according to one of Claims 1 to 13, characterised in that the said temperature of the reaction mixture is between 70 and 100°C.

15. Process according to either of Claims 1 and 14, characterised in that the reaction temperature is maintained for 1 to 4 hours.

16. Process according to Claim 15, characterised in that the reaction temperature is maintained for 3 to 4 hours.

17. Process according to one of Claims 1 to 16, characterised in that the residue is separated by filtration, decanting or centrifuging.

18. New colloidal dispersion of a rare earth compound in an aqueous medium corresponding to the following chemical formula (I):

$$RE(A)_x (OH)_{3-x} \quad (I)$$

– RE denotes the rare earth cation;
– A denotes an anion of a water-soluble monovalent acid exhibiting a pka of between 2.5 and 5;
– x is a number smaller than 2.5 and larger than 1.

19. New colloidal dispersion according to Claim 18, characterised in that RE denotes an yttric rare earth.

20. New colloidal dispersion according to Claim 19, characterised in that RE denotes yttrium or holmium.

21. New colloidal dispersion according to one of Claims 18 to 20, characterised in that A denotes the acetate anion.

22. New colloidal dispersion according to one of Claims 18 to 21, characterised in that x is between 1.1 and 2.2.

23. New colloidal dispersion according to Claim 22, characterised in that x is between 1.2 and 1.8.

24. New colloidal dispersion according to one of Claims 18 to 23, characterised in that the colloids are of spherical shape.

25. New colloidal dispersion according to one of Claims 18 to 24, characterised in that the mean hydrodynamic diameter of the colloids lies between 30 and 100 Å.

26. New colloidal dispersion according to one of Claims 18 to 25, characterised in that it has a content of rare earth in colloidal form of between 85 and 100 %.

27. New colloidal dispersion according to one of Claims 18 to 26, characterised in that it may exhibit a high concentration of rare earth compound expressed as rare earth oxide which may reach 1 mole/litre.

28. New colloidal dispersion according to one of Claims 18 to 27, characterised in that it has a pH of between 6.0 and 7.5.